# FASCICULE DE BREVET EUROPEEN

(11) **EP 1 846 674 B1**
(45) Date de publication et mention de la délivrance du brevet: **31.03.2010**
(21) Numéro de dépôt: 06709465.6
(22) Date de dépôt: 31.01.2006
(51) Int. Cl.: F16H 61/00

(54) **BOITE DE VITESSES COMPARTIMENTEE**
PARTITIONIERTES GETRIEBE
PARTITIONED GEARBOX

(30) Priorité: 01.02.2005 FR 0550296
(43) Date de publication de la demande: 24.10.2007
(73) Titulaire: RENAULT S.A.S., 92100 Boulogne Billancourt (FR)
(72) Inventeur: BUANNEC, Michel, F-78480 Verneuil-sur-seine (FR); CLOUD, Philippe, F-92500 Rueil Malmaison (FR); PICARD, Marc, F-92500 Rueil Malmaison (FR)
(74) Mandataire: Rougemont, Bernard
(86) Numéro de dépôt international: PCT/FR2006/050081
(87) Numéro de publication internationale: WO 2006/082337

(56) Documents cités:
- EP-A- 1 245 863
- WO-A-02/055903
- DE-A1- 4 237 853
- DE-A1- 10 310 831
- DE-A1- 19 516 404
- FR-A- 2 703 007
- FR-A- 2 852 651
- US-A- 4 603 596
- JOST K: "A DIFFERENT AUTOMATIC" AUTOMOTIVE ENGINEERING, SOCIETY OF AUTOMOTIVE ENGINEERS. WARRENDALE, US, vol. 111, no. 7, juillet 2003 (2003-07), pages 32-34,36, XP001174593 ISSN: 0098-2571

## Description

La présente invention concerne les boîtes de vitesses de véhicule automobile comprenant plusieurs arbres parallèles, munis chacun d'une pluralité de pignons.

Plus particulièrement, elle a pour objet une boîte de vitesses de véhicule automobile à arbres parallèles munis d'une pluralité de pignons, comprenant deux arbres primaires concentriques reliés alternativement au moteur du véhicule par un premier et un deuxième embrayage, et deux arbres secondaires reliés aux roues du véhicule par un différentiel.

Cette invention trouve une application privilégiée, mais non limitative, sur les boîtes de vitesses robotisée à arbres primaires concentriques, et à double embrayage d'entrée.

Le document "A Different Automatic" de Kevin Fost décrit une boîte de vitesses avec les caractéristiques du préambule de la revendication 1.

Par la publication DE 198 21 164, on connaît une boîte de vitesses du type indiqué ci-dessus, dite à « double embrayage », comportant de façon classique un carter en deux parties accouplées. Ces deux parties de carter, dites « carter d'embrayage » et « carter des mécanismes », définissent en réalité seul volume, renfermant d'une part les deux embrayages, et d'autre part le mécanisme de commande interne de boîte, c'est-à-dire les pignons, les fourchettes, les synchroniseurs, et leurs organes de commande robotisée, dont le distributeur et la pompe, ainsi que des actionneurs hydrauliques de sélection et de passage des vitesses.

Dans une telle architecture, les synchroniseurs et les engrenages d'une part, et le système hydraulique de commande d'autre part, reçoivent la même huile, en circulation à l'intérieur de l'ensemble des carters. Cette disposition pose des difficultés, car le fonctionnement optimal de la boîte suppose l'utilisation d'une huile relativement visqueuse pour les synchroniseurs et les engrenages, et d'une huile plus fluide pour le système hydraulique de commande. Par ailleurs, l'utilisation de la même huile pour la lubrification des mécanismes et pour le circuit hydraulique, risque de dégrader ce dernier car l'huile est salie par la lubrification du mécanisme, de sorte qu'il est prudent de prévoir un filtre sous pression en sortie de la pompe, en plus du filtre d'entrée. Enfin, avec une huile trop fluide, il n'est pas possible de phosphater les pignons pour prévenir leur usure. Dans ces conditions, il est nécessaire de prévoir à l'origine une « surlongueur » sur les dentures de pignon, en prévision de cette usure.

Pour traiter ce problème, il a déjà été proposé de faire chauffer l'huile de la boîte lors du démarrage du véhicule. Cette mesure permet de réduire rapidement sa viscosité, de manière à faciliter la commande des actionneurs en début de roulage. Toutefois, cette solution suppose un pilotage suffisamment fin des moyens de chauffage de l'huile pour être satisfaisante, ou bien de ne pas laisser le véhicule avancer, tant que la température de l'huile n'est pas suffisante.

La présente invention vise à supprimer totalement l'incompatibilité entre la lubrification des organes mécaniques d'une boite de vitesses, et le pilotage de ses embrayages et de ses actionneurs, sans pénaliser la boîte par une augmentation de son encombrement.

Dans ce but, elle propose que la boîte présente un premier compartiment renfermant au moins un embrayage, un deuxième compartiment renfermant des éléments de commande hydraulique, et un troisième compartiment renfermant le mécanisme de changement de vitesses de la boîte.

Les mesures proposées sont compatibles avec les contraintes d'encombrement liées aux boîtes de vitesses robotisées à double embrayage.

En effet, le mécanisme du troisième compartiment peut comprendre un arbre supplémentaire dont le pignon le plus éloigné du moteur est plus proche ou à même distance axiale que le pignon le plus éloigné d'un premier arbre secondaire, de façon à limiter l'encombrement en hauteur de la boîte.

Pour dégager un espace disponible en haut de la boîte, à l'opposé du moteur, le premier arbre secondaire peut aussi être plus court que le deuxième arbre secondaire.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 est une représentation schématique des arbres et des pignons d'un exemple non limitatif de boîte de vitesses conforme à l'invention, et
- la figure 2 fait ressortir les principales caractéristiques de celle-ci.

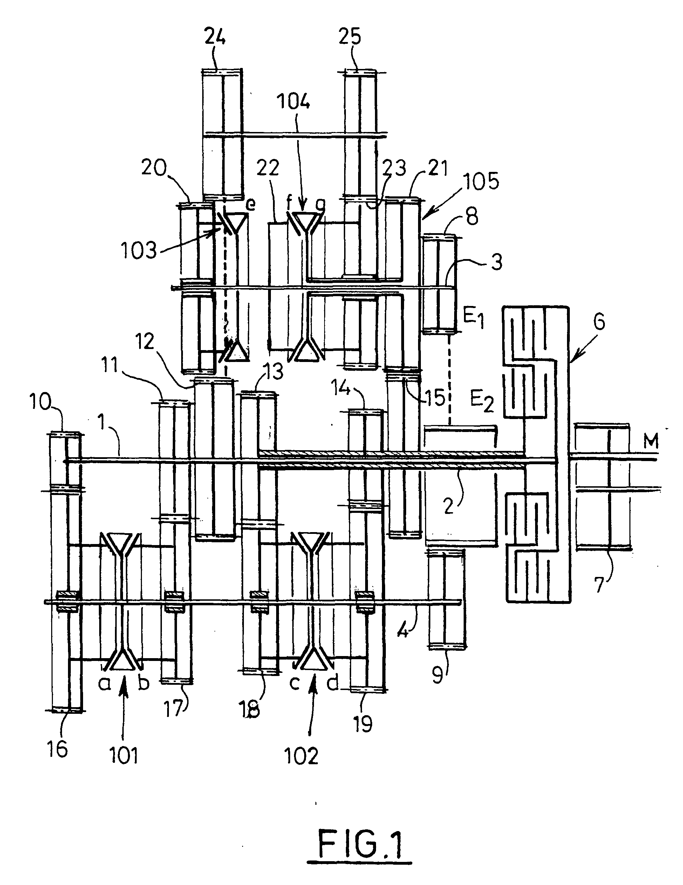

La boîte de vitesses illustrée par la figure 1 comprend deux arbres primaires concentriques 1, 2 reliés au moteur M. L'arbre primaire 1 passe à l'intérieur de l'arbre primaire 2, et dépasse de celui-ci du côté opposé au moteur. Deux arbres secondaires 3, 4, et un arbre supplémentaire 5, sont parallèles aux arbres primaires 1, 2. Un système de double embrayage 6 et un différentiel 7, sont représentés de manière schématique. Le double embrayage 6 comprend deux embrayages concentriques E1, E2, reliés au moteur M. Le premier embrayage E1 est par ailleurs relié au premier arbre primaire 1, tandis que le l'embrayage E2 est relié au deuxième arbre primaire 2. Chacun des embrayages E1, E2 peut être placé en position débrayée, ou ouverte, où l'arbre primaire correspondant 1, 2 est indépendant du moteur M, ou en position embrayée ou fermée, où le couple moteur est transmis à l'arbre primaire correspondant.

Chacun des arbres secondaires 3, 4, est équipé, côté moteur, d'un pignon d'attaque de différentiel référencé respectivement 8 et 9. Les deux pignons d'attaque 8, 9 engrènent avec le même pignon du différentiel, de sorte que le couple moteur peut être transmis aux roues du véhicule par l'un ou l'autre des deux arbres secondaires 3, 4. On notera que la figure 1 est une représentation schématique à plat d'arbres qui en réalité ne sont pas coplanaires. Le lien en rotation entre le pignon d'attaque 8 et le différentiel 7 est représenté par des pointillés sur la figure 1.

Chaque arbre secondaire 3, 4, porte plusieurs pignons fous et des systèmes de crabots permettant de solidariser les différents pignons fous de leur arbre secondaire.

En partant de l'extrémité opposée au moteur, le premier arbre primaire 1 porte trois pignons fixes 10, 11, 12, solidaires de celui-ci, tandis que le deuxième arbre primaire 2, porte aussi trois pignons fixes 13, 14, 15.

Le deuxième arbre secondaire 4 porte du côté opposé au moteur, deux pignons fous 16, 17, reliés au même crabot double 101. Quand le crabot 101 est en position « a » sur la figure, l'arbre secondaire 4 est solidaire en rotation du pignon 16. Quand, il est en position « b », le même arbre 4 est solidaire en rotation du pignon 17. L'arbre 4 porte aussi, plus près du moteur, un autre crabot double 102, grâce auquel les pignons fous 18, 19, peuvent être reliés de manière sélective à l'arbre primaire 4, selon que ce crabot est en position « c » ou « d » sur la figure.

De même, le premier arbre secondaire 3 est équipé, dans sa partie éloignée du moteur, d'un crabot simple 103, grâce auquel son pignon fou 20 peut être solidarisé de celui-ci en position « e ». Le premier arbre secondaire 3 porte, du côté du moteur, un pignon fou 21 et un crabot double 104, solidaire en rotation de celui-ci. Le premier arbre secondaire 3 porte également une roue dentée 22 solidaire en rotation de celui-ci, et un pignon 23, tournant librement autour de l'ensemble comprenant le pignon 21 et le crabot double 104.

Lorsque le crabot double 104 est en position neutre, le pignon 23, l'ensemble pignon 21 et crabot double 104, ainsi que l'arbre primaire 3, sont tous les trois libres en rotation, et indépendants les uns des autres. Lorsque le crabot 104 est en position « f », la roue dentée 22 est solidaire en rotation du pignon 21. Lorsque le crabot 104 est en position « g », le pignon 23 est solidaire en rotation du pignon 21.

Enfin, l'arbre supplémentaire 5 porte, à l'opposé du moteur, un pignon 24, solidaire en rotation de celui-ci, et, du côté moteur, un deuxième pignon fixe 25.

Le pignon le plus éloigné du moteur sur l'arbre primaire 1, est le pignon 10. Il engrène avec le pignon 16 du deuxième arbre secondaire 4. Le deuxième arbre secondaire 4 est aussi long que la somme des longueurs des deux arbres primaires, car il est aussi relié dans sa partie avant au différentiel 7, par le pignon 9. Le pignon 11 engrène avec le pignon 17, le pignon 13 engrène avec le pignon 18, et le pignon 14 engrène avec le pignon 19. De même, sur le premier arbre secondaire 3, le pignon 12 engrène avec le pignon 20, et le pignon 15 engrène avec le pignon 21.

Le pignon 20, situé le plus loin du moteur sur le premier arbre secondaire 3, engrène avec le pignon 12, qui est le pignon monté le plus près du moteur sur le premier arbre primaire 1. Ce même pignon 12 engrène, dans une autre direction spatiale, avec le pignon 24, qui est le pignon monté le plus loin du moteur sur l'arbre supplémentaire 5. L'autre pignon 25 de l'arbre supplémentaire 5, engrène avec le pignon 23 du premier arbre secondaire 3.

Le premier arbre secondaire 3 et l'arbre supplémentaire 5, particulièrement courts, permettent de réduire l'encombrement de la boîte en hauteur, du côté opposé au moteur. La distance ainsi dégagée correspond à la somme des épaisseurs des pignons 16, 17, et du crabot double 101, disposé entre ces derniers.

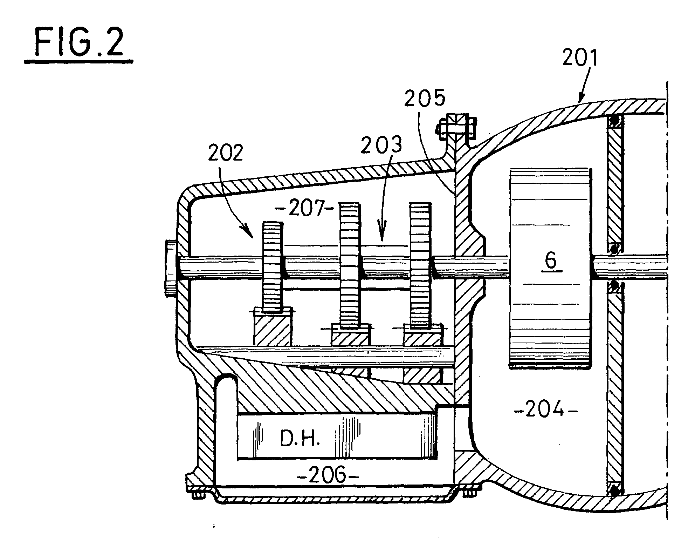

Sur la figure 2, on a représenté de façon simplifiée, un mécanisme de boîte de vitesses correspondant, par exemple, à celui de la figure 1, qui n'a toutefois aucun caractère limitatif. La figure 1 constitue en effet à cet égard, un simple exemple d'application des dispositions prévues par l'invention.

Sur cette figure, on voit en coupe un carter d'embrayage 201 et un carter des mécanismes 202 d'une boîte de vitesses telle que celle de la figure 1. Les carters 201, 202 présentent une face d'accouplement 205. Ils renferment respectivement un embrayage double 6 dans un premier compartiment 204 fermé, et un mécanisme de changement de vitesses 203 dans un second compartiment fermé 206.

Le mécanisme 203 est par exemple à arbres parallèles munis d'une pluralité de pignons de vitesses, comprenant deux arbres primaires concentriques reliés alternativement au moteur du véhicule par un premier et un deuxième embrayage, et deux arbres secondaires reliés aux roues du véhicule par un différentiel de façon analogue ou non à la figure 1.

Conformément à l'invention, on voit que cette boîte présente un premier compartiment 204 renfermant au moins un embrayage, un second compartiment 206 renfermant des éléments de commande hydraulique, et un troisième compartiment 207 renfermant le mécanisme de changement de vitesses 203, dont les pignons de vitesses, les synchroniseurs et leurs actionneurs, non représentés, qui peuvent être électriques et disposés à l'extérieur de la boîte.

Les éléments du second compartiment incluent une pompe et un distributeur hydraulique DH, car l'invention trouve une application privilégiée sur une boîte de vitesses robotisée à double embrayage d'entrée dans laquelle les embrayages sont du type « multidisques humides à bain d'huile ». Dans une telle boîte, la commande des embrayages s'effectue avec un distributeur hydraulique et des actionneurs hydrauliques, comme dans une transmission automatique.

Comme indiqué plus haut, l'huile de la commande hydraulique doit idéalement être une huile relativement fluide, du type utilisé dans les transmissions automatiques à train épicycloïdaux et convertisseur hydrocinétique de couple, alors que la lubrification du mécanisme à engrenages est mieux assurée par une huile plus visqueuse de boîte manuelle conventionnelle à engrenages.

Grâce au compartimentage des carters proposé par l'invention, on peut utiliser des huiles différentes dans les compartiments 204, 206 d'une part, et 207 d'autre part. Ainsi, l'ensemble des éléments mécaniques, notamment les pignons et les synchroniseurs, peut être lubrifié par une huile plus visqueuse que celle du circuit de commande hydraulique. Les deux premiers compartiments renferment donc de préférence une huile plus fluide que le troisième. Comme indiqué sur la figure 2, le premier compartiment 204 est situé dans le carter d'embrayage 201. Par ailleurs, il est souhaitable que les deux premiers compartiments 204, 206 communiquent.

Le deuxième compartiment 206, qui renferme les éléments de commande hydraulique est avantageusement disposé dans le bas de la boîte, du côté opposé au différentiel, tandis que le troisième compartiment 207, qui renferme par exemple les deux arbres primaires 1, 2, les deux arbres secondaires 3, 4 et un arbre supplémentaire 5 comme sur la figure 1, est situé dans le haut de la boîte, dans le carter des mécanismes 202.

Enfin, le premier compartiment 204 peut avantageusement renfermer un double embrayage multidisques humide E1, E2.

Comme indiqué plus haut, ces dispositions permettent de renoncer à l'emploi d'une huile spécifique, compatible à la fois avec les éléments hydrauliques et avec les éléments mécaniques de la boîte. Par ailleurs, il n'est plus nécessaire de prévoir une « surlongueur » des pignons, car ces derniers peuvent être phosphatés. La séparation des huiles permet enfin de basculer facilement entre des embrayages « secs » ou « humides », sans adaptation des composants mécaniques de la boîte (commande de vitesses, pignons, synchroniseurs, etc.).

## Revendications

1. Boîte de vitesses de véhicule automobile à arbres parallèles munis d'une pluralité de pignons de vitesses de couple, comprenant deux arbres primaires concentriques (1, 2) reliés alternativement au moteur du véhicule par un premier et un deuxième embrayage (E1, E2), et deux arbres secondaires 3, 4, reliés aux roues du véhicule par un différentiel (7), cette boîte présentant un premier compartiment (204) renfermant au moins un embrayage, un deuxième compartiment (206) renfermant des éléments de commande hydraulique, et un troisième compartiment (207) renfermant le mécanisme de changement de vitesses (203) de la boîte, le premier compartiment (204) est situé dans le carter d'embrayage (201), et le deuxième compartiment (206) renferme un distributeur, **caractérisée en ce que** le deuxième compartiment (206) renferme une pompe hydraulique.

2. Boîte de vitesses selon la revendication 1, **caractérisée en ce que** le mécanisme (203) comprend un arbre supplémentaire (5) dont le pignon le plus éloigné du moteur (24) est plus proche ou à même distance axiale que le pignon le plus éloigné d'un premier arbre secondaire (3).

3. Boîte de vitesses selon la revendication 1 ou 2, **caractérisée en ce que** le premier arbre secondaire (3) est plus court que le deuxième arbre secondaire (4).

4. Boîte de vitesses selon la revendication 1, 2 ou 3, **caractérisée en ce que** le pignon (20) le plus éloigné du moteur, d'un premier arbre secondaire (3), engrène avec le pignon le plus près du moteur d'un premier arbre primaire (1).

5. Boîte de vitesses selon la revendication 1, 2 ou 3, **caractérisée en ce que** les deux premiers compartiments (204, 206) communiquent.

6. Boîte de vitesses selon l'une des revendications précédentes, **caractérisée en ce que** le deuxième compartiment est disposé dans le bas de la boîte, du côté opposé au différentiel.

7. Boîte de vitesses selon l'une des revendications précédentes, **caractérisée en ce que** le troisième compartiment (207) est situé dans le haut de la boîte, dans le carter des mécanismes (202).

8. Boîte de vitesses selon l'une des revendications précédentes, **caractérisé en ce que** les deux premiers compartiments renferment une huile plus fluide que le troisième.

## Claims

1. Motor vehicle gearbox with parallel shafts fitted with a plurality of torque speed gears, comprising two concentric primary shafts (1, 2) alternately connected to the vehicle engine by a first and a second clutch (E1, E2) and two secondary shafts (3, 4) connected to the wheels of the vehicle by a differential (7), this gearbox having a first compartment (204) containing at least one clutch, a second compartment (206) containing hydraulic control elements, and a third compartment (207) containing the gearshift mechanism (203) of the gearbox, the first compartment (204) is situated in the clutch housing (201) and the second compartment (206) contains a distributor, **characterized in that** the second compartment (206) contains a hydraulic pump.

2. Gearbox according to Claim 1, **characterized in that** the mechanism (203) comprises an additional shaft (5), of which the gear furthest from the engine (24) is axially closer or the same distance away as the furthest gear of a first secondary shaft (3).

3. Gearbox according to Claim 1 or 2, **characterized in that** the first secondary shaft (3) is shorter than the second secondary shaft (4).

4. Gearbox according to Claim 1, 2 or 3, **characterized in that** the gear (20) furthest from the engine, of a first secondary shaft (3), meshes with the gear closest to the engine of a first primary shaft (1).

5. Gearbox according to Claim 1, 2 or 3, **characterized in that** the first two compartments (204, 206) are in communication with one another.

6. Gearbox according to one of the preceding claims, **characterized in that** the second compartment is positioned in the bottom of the gearbox, on the opposite side to the differential.

7. Gearbox according to one of the preceding claims, **characterized in that** the third compartment (207) is positioned in the top of the gearbox, in the mechanism housing (202).

8. Gearbox according to one of the preceding claims, **characterized in that** the first two compartments contain a more fluid oil than the third.

## Patentansprüche

1. Kraftfahrzeuggetriebekasten mit parallelen Wellen, die mit mehreren Drehzahl-Drehmoment-Ritzeln versehen sind, wobei das Kraftfahrzeuggetriebe zwei konzentrische Primärwellen (1, 2), die abwechselnd über eine erste und eine zweite Kupplung (E1, E2) mit dem Motor des Fahrzeugs verbunden sind, und zwei Sekundärwellen 3, 4 umfasst, die über ein Differential (7) mit den Rädern des Fahrzeugs verbunden sind, wobei dieser Kasten eine erste Kammer (204), in der mindestens eine Kupplung aufgenommen ist, eine zweite Kammer (206), in der Hydrauliksteuerungselemente aufgenommen sind, und eine dritte Kammer (207) aufweist, in der der Gangschaltmechanismus (203) des Kastens aufgenommen ist, wobei sich die erste Kammer (204) im Kupplungsgehäuse (201) befindet und in der zweiten Kammer (206) ein Verteiler aufgenommen ist, **dadurch gekennzeichnet, dass** in der zweiten Kammer (206) eine Hydraulikpumpe aufgenommen ist.

2. Getriebekasten nach Anspruch 1, **dadurch gekennzeichnet, dass** der Mechanismus (203) eine zusätzliche Welle (5) umfasst, deren Ritzel, das am weitesten vom Motor (24) entfernt ist, näher liegt oder denselben axialen Abstand hat wie das am weitesten entfernte Ritzel einer ersten Sekundärwelle (3).

3. Getriebekasten nach Anspruch 1 oder 2, **dadurch gekennzeichnet, dass** die erste Sekundärwelle (3) kürzer als die zweite Sekundärwelle (4) ist.

4. Getriebekasten nach Anspruch 1, 2 oder 3, **dadurch gekennzeichnet, dass** das Ritzel (20) einer ersten Sekundärwelle (3), das am weitesten vom Motor entfernt ist, mit dem Ritzel einer ersten Primärwelle (1), das dem Motor am nächsten liegt, kämmt.

5. Getriebekasten nach Anspruch 1, 2 oder 3, **dadurch gekennzeichnet, dass** die beiden ersten Kammern (204, 206) miteinander kommunizieren.

6. Getriebekasten nach einem der vorhergehenden Ansprüche, **dadurch gekennzeichnet, dass** die zweite Kammer unten im Kasten, auf der dem Differential gegenüberliegenden Seite angeordnet ist.

7. Getriebekasten nach einem der vorhergehenden Ansprüche, **dadurch gekennzeichnet, dass** sich die dritte Kammer (207) oben im Kasten im Mechanismengehäuse (202) befindet.

8. Getriebekasten nach einem der vorhergehenden Ansprüche, **dadurch gekennzeichnet, dass** in den beiden ersten Kammern ein flüssigeres Öl als in der dritten aufgenommen ist.
